# EUROPEAN PATENT SPECIFICATION

(11) **EP 4 279 981 B1**
(45) Date of publication and mention of the grant of the patent: **22.05.2024**
(21) Application number: 23167987.9
(22) Date of filing: 14.04.2023
(51) Int. Cl.: G02B 27/01, G02B 27/00

(54) **VEHICLE DISPLAY DEVICE**
FAHRZEUGANZEIGEVORRICHTUNG
DISPOSITIF D'AFFICHAGE POUR VÉHICULE

(30) Priority: 18.04.2022 JP 2022068009
(43) Date of publication of application: 22.11.2023
(73) Proprietor: Yazaki Corporation, Tokyo (JP)
(72) Inventor: Ichikawa, Junichi, Susono-shi, Shizuoka, 410-1194 (JP); Takahashi, Nobuyuki, Susono-shi, Shizuoka, 410-1194 (JP); Shihaku, Jun, Susono-shi, Shizuoka, 410-1194 (JP)
(74) Representative: Grünecker Patent- und Rechtsanwälte PartG mbB

(56) References cited:
- EP-A1- 3 026 483
- US-A1- 2019 086 662
- US-A1- 2020 103 665
- US-A1- 2021 072 552

## Description

### BACKGROUND OF THE INVENTION

### 1. Field of the Invention

The present invention relates to a vehicle display device.

### 2. Description of the Related Art

Conventionally, a vehicle is equipped with a vehicle display device that displays information to be provided to an occupant in a vehicle cabin. For example, as the vehicle display device, what is called a head-up display device is known that emits emitted light related to display information toward a windshield or combiner and reflects the emitted light from the windshield or the like toward an occupant, thereby allowing the occupant to visually recognize the display information as a virtual image (refer to patent publications WO2017163292 A1 20170928, JP2020148950 A 20200917 and JP2016014861 A 20160128)

However, the occupant turns his/her eyes farther away as a vehicle speed increases. Therefore, in the vehicle display device, a virtual image distance needs to be optimized depending on the vehicle speed, for example, by increasing the virtual image distance as the vehicle speed increases. If an inter-vehicle distance with a preceding vehicle is short when waiting at a traffic light or the like, and a virtual image position is set at the position of the preceding vehicle, the occupant may feel uncomfortable with the virtual image display. In this case, therefore, in the vehicle display device, the virtual image distance needs to be optimized depending on the presence or absence of an object ahead, for example, by moving the virtual image position forward. For example, Japanese Domestic Re-publication of patent publication WO2017163292 A1 dated 28 September 2017 discloses a technique of changing a virtual image distance by changing a gap between a display unit and a turning-back mirror. Japanese patent publication JP2020148950 A dated 17 September 2020 discloses a technique of moving the position of an intermediate image in an optical axial direction by rotationally driving a diffusion section ahead of a turning-back mirror, thereby changing a virtual image distance. Japanese patent publication JP2016014861 A dated 28 January 2016 discloses a technique of changing an optical path length between a display unit and a turning-back mirror by driving an optical axis adjustment section between them, thereby changing a virtual image distance. US 2020/103665 A1 with publication date 2 April 2020 discloses a head-up display device adjusting the projection position and optical distance to the driver based on two actuators adjusting respectively the position of a lens and the reflection angle of a concave mirror. In such a vehicle display device capable of adjusting the virtual image distance, degradation in the display quality of the virtual image display due to changes in the virtual image distance is not preferable, and there is a room for improvement in this respect.

### SUMMARY OF THE INVENTION

Therefore, an object of the present invention is to provide a vehicle display device that can optimize a virtual image distance depending on usage conditions of a vehicle.

A vehicle display device according to one aspect of the present invention includes an output unit that outputs output light of display information to be visually recognized as a virtual image by an occupant in a vehicle cabin; a reflector that directly or indirectly receives the output light from the output unit, and reflects the output light toward an eye box indicating a region in which the occupant is able to visibly recognize the virtual image; and a controller configured to control an operation of the output unit, wherein the output unit includes: a display unit that emits the display information as display light; a turning-back mirror that reflects, as the output light, the display light emitted from the display unit; a holding member that holds the display unit and the turning-back mirror without changing relative positions of the display unit and the turning-back mirror; and a drive mechanism that is able to reciprocate the holding member along an optical axial direction of the turning-back mirror, and the controller drives and controls the drive mechanism to reciprocate the holding member together with the display unit and the turning-back mirror, thereby changing an optical path length of the output light reflected by the turning-back mirror.

The above and other objects, features, advantages and technical and industrial significance of this invention will be better understood by reading the following detailed description of presently preferred embodiments of the invention, when considered in connection with the accompanying drawings.

### BRIEF DESCRIPTION OF THE DRAWINGS

FIG. 1 is a schematic diagram illustrating a vehicle display device of an embodiment;
FIG. 2 is an explanatory diagram for explaining a drive mechanism; and
FIG. 3 is an explanatory diagram for explaining a drive control mode.

### DETAILED DESCRIPTION OF THE PREFERRED EMBODIMENTS

The following is a detailed description of an embodiment of a vehicle display device according to the present invention with reference to the drawings. The invention is not limited by this embodiment. Embodiment

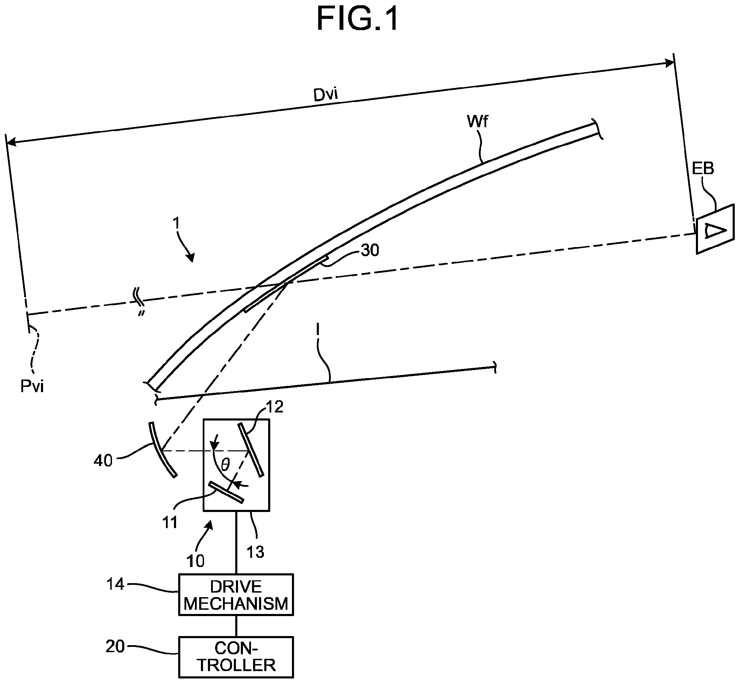

One embodiment of a vehicle display device according to the present invention is described with reference to FIGS. 1 to 3.

A vehicle display device 1 includes an output unit 10 that outputs output light of display information to be visually recognized as a virtual image by an occupant in a vehicle cabin (FIG. 1). In the vehicle display device 1, the output unit 10 is installed in an instrument panel I and output light from the output unit 10 is directly or indirectly emitted to the outside of the instrument panel I. The vehicle display device 1 includes a controller 20 that controls the operation of the output unit 10 (FIG. 1).

The vehicle display device 1 further includes a reflector 30 that directly or indirectly receives the output light from the output unit 10 outside the instrument panel I, and reflects the output light toward an eye box EB indicating a region in which the occupant can visibly recognize the virtual image (FIG. 1).

The reflector 30 is, for example, a windshield (front windshield Wf) itself. In this case, the windshield (front windshield Wf) as the reflector 30 directly or indirectly receives the output light from the output unit 10, and reflects the output light from the windshield (front windshield Wf) toward the eye box EB.

The reflector 30 may be provided against the windshield (front windshield Wf). The reflector 30 is formed as a half-mirror that directly or indirectly receives the output light from the output unit 10 on its reflective surface, reflects the output light to the eye box EB, and emits light incident from the outside of the vehicle toward the occupant. For example, the reflector 30 is formed in a film shape along a curved surface shape of the windshield (front windshield Wf), and is attached to a wall surface of the windshield on the inside of the vehicle cabin with an adhesive. The reflector 30 may also be formed in a film shape along the curved surface shape of the windshield (front windshield Wf), and sealed in a laminated glass windshield together with an intermediate film. The reflector 30 may also be a film coated on the wall surface of the windshield (front windshield Wf) on the inside of the vehicle cabin by painting or the like.

The reflector 30 may also be a combiner disposed closer to the occupant side than the windshield (front windshield Wf).

The vehicle display device 1 causes the reflector 30 having directly or indirectly received the output light from the output unit 10 to reflect the received output light toward the eye box EB, thereby causing the occupant to recognize a virtual image displayed as if it were present at a virtual image position Pvi (FIG. 1).

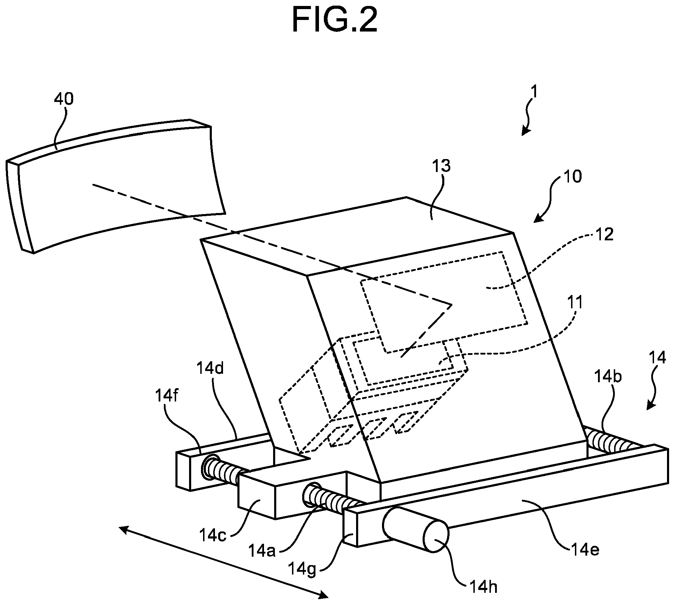

The output unit 10 includes a display unit 11 that emits the display information as display light, and a turning-back mirror 12 that reflects, as the output light, the display light emitted from the display unit 11 (FIGS. 1 and 2).

The display unit 11 displays image information, such as characters, numbers, and figures, as the display information. The display unit 11, for example, emits display light, which is related to the display information, depending on light from a light source (what is called backlight), and projects the display light onto the turning-back mirror 12. As the display unit 11, a light transmissive thin film transistor (TFT) liquid crystal display is used. The controller 20 controls the display unit 11 to perform display control of the display light (adjustment or the like of content and luminance of the display information).

The display light of the display unit 11 is incident on the turning-back mirror 12, and the turning-back mirror 12 reflects the display light. A flat mirror is used for the turning-back mirror 12.

The output unit 10 has a structure that does not change an angle formed by incident light and reflected light on the turning-back mirror 12. Thus, the output unit 10 includes a holding member 13 that holds the display unit 11 and the turning-back mirror 12 without changing their relative positions (FIGS. 1 and 2). The holding member 13 is formed in a shape having no part in an optical path of the display light from the display unit 11 to the turning-back mirror 12 and no part in an optical path of the reflected light (output light) from the turning-back mirror 12.

The output unit 10 further includes a drive mechanism 14 capable of reciprocating the holding member 13 along the optical axial direction (optical path of the reflected light) of the turning-back mirror 12 (FIGS. 1 and 2). The drive mechanism 14 reciprocates the holding member 13 along the optical axial direction of the turning-back mirror 12, thereby reciprocating the holding member 13 along the optical axial direction of the turning-back mirror 12 together with the display unit 11 and the turning-back mirror 12. A ball screw is used as the drive mechanism 14.

The drive mechanism 14 includes a screw shaft 14a and a guide shaft 14b spaced apart from and parallel to the screw shaft 14a (FIG. 2). The holding member 13 is disposed between the screw shaft 14a and the guide shaft 14b, and is assembled to the screw shaft 14a and the guide shaft 14b to be freely movable in the axial directions of the screw shaft 14a and the guide shaft 14b. Therefore, the drive mechanism 14 includes a nut portion 14c (FIG. 2) formed on the holding member 13 to be screwed onto the screw shaft 14a, and a guided portion (not illustrated) formed on the holding member 13 to allow the guide shaft 14b to be inserted through a through hole. The respective axial directions of the screw shaft 14a and the guide shaft 14b are disposed to be parallel to the optical axial direction of the turning-back mirror 12.

The drive mechanism 14 further includes a first connecting member 14d that connects one end of the screw shaft 14a to one end of the guide shaft 14b and a second connecting member 14e that connects the other end of the screw shaft 14a to the other end of the guide shaft 14b (FIG. 2). The screw shaft 14a is rotated around its axis with respect to the first connecting member 14d and the second connecting member 14e. The one end of the screw shaft 14a is pivotally supported by a bearing 14f of the first connecting member 14d and the other end of the screw shaft 14a is pivotally supported by a bearing 14g of the second connecting member 14e (FIG. 2). On the other hand, the one end of the guide shaft 14b is fixed to the first connecting member 14d and the other end of the guide shaft 14b is fixed to the second connecting member 14e.

The drive mechanism 14 includes, as a drive source, a motor 14h for rotating the screw shaft 14a around its axis (FIG. 2). The motor 14h transmits rotational torque to the other end of the screw shaft 14a. An output shaft of the motor 14h is formed as the screw shaft 14a.

When the drive mechanism 14 is driven and controlled by the controller 20, the motor 14h generates a positive torque to relatively move the holding member 13 along the respective axial directions of the screw shaft 14a and the guide shaft 14b, for example, from the first connecting member 14d side to the second connecting member 14e side. Furthermore, when the drive mechanism 14 is driven and controlled by the controller 20, the motor 14h generates a negative torque to relatively move the holding member 13 along the respective axial directions of the screw shaft 14a and the guide shaft 14b, for example, from the second connecting member 14e side to the first connecting member 14d side. Consequently, the controller 20 drives and controls the motor 14h to generate a positive torque or a negative torque, so that the drive mechanism 14 can reciprocate the holding member 13 along the optical axial direction of the turning-back mirror 12.

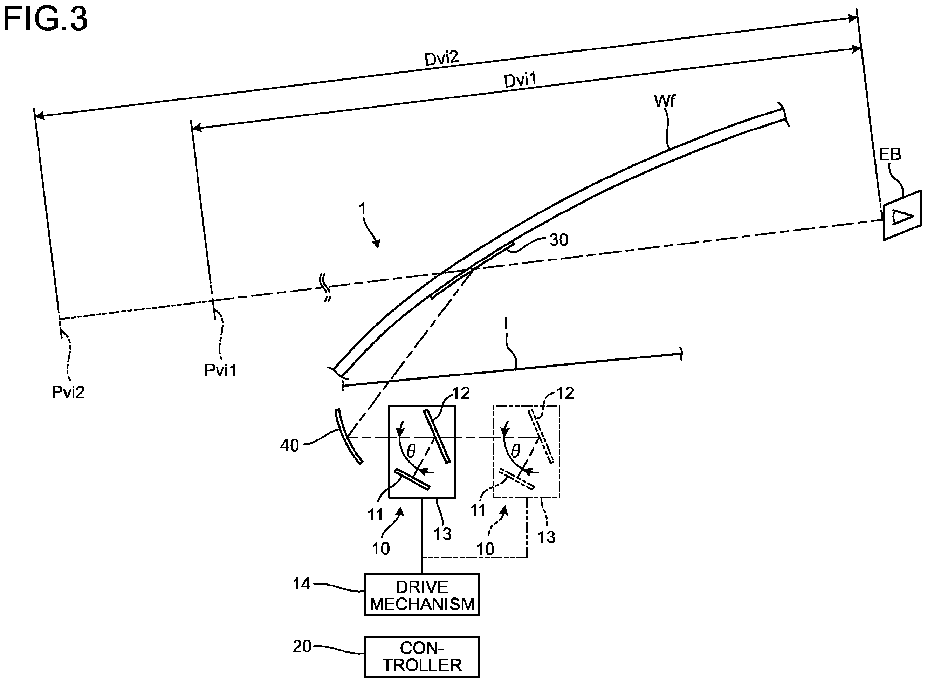

The controller 20 drives and controls the drive mechanism 14 to reciprocate the holding member 13 together with the display unit 11 and the turning-back mirror 12, thereby changing the optical path length of the output light reflected by the turning-back mirror 12 (FIGS. 1 and 3). This changes the virtual image distance (distance from the eye box EB to the virtual image position Pvi) Dvi in the vehicle display device 1. For example, in the vehicle display device 1, as illustrated in FIG. 3, by increasing the optical path length of the output light reflected by the turning-back mirror 12 (displacement from a solid line to a two dot chain line), the virtual image position Pvi is moved away from the eye box EB (Pvi1→Pvi2), resulting in an increase in the virtual image distance Dvi (Dvi1→Dvi2). In the vehicle display device 1, as illustrated in FIG. 3, by decreasing the optical path length of the output light reflected by the turning-back mirror 12 (displacement from the two dot chain line to the solid line), the virtual image position Pvi approaches the eye box EB (Pvi2→Pvi1), resulting in a decrease in the virtual image distance Dvi (Dvi2→Dvi1).

Moreover, the vehicle display device 1 changes the optical path length of the reflected light (output light) from the turning-back mirror 12 without changing relative positions of the display unit 11 and the turning-back mirror 12 (that is, without changing an angle θ formed by incident light and reflected light on the turning-back mirror 12) (FIG. 3). Therefore, the vehicle display device 1 can change the optical path length of the reflected light (output light) from the turning-back mirror 12 without changing a light-receiving area of display light from the display unit 11 on the turning-back mirror 12. Consequently, the vehicle display device 1 can change the virtual image distance Dvi without degrading the display quality (resolution) of virtual image display.

Specifically, the vehicle display device 1 includes, in the instrument panel I, a reflective mirror 40 that reflects the output light from the output unit 10 toward the reflector 30 (FIG. 1). That is, in the vehicle display device 1, the output light from the output unit 10 is indirectly emitted out of the instrument panel I via the reflective mirror 40, and the emitted light is directly received by the reflector 30 and is reflected to the eye box EB.

The reflective mirror 40 is a magnifying mirror, such as an aspheric (free curved surface) concave mirror that magnifies and reflects the output light from the output unit 10, and functions to magnify and display the virtual image. The reflective mirror 40 may be configured to, for example, rotate a reflective surface (concave surface) around the axis thereof to change the position of the reflective surface by being driven and controlled by the controller 20. In the vehicle display device 1, the virtual image position Pvi can be adjusted in the vertical direction of the vehicle by, for example, changing the position of the reflective surface of the reflective mirror 40 and changing the direction of the reflected light reflected by the reflective surface.

The turning-back mirror 12 is disposed at a position where the display light emitted from the display unit 11 is reflected toward the reflective mirror 40 (FIG. 1). In other words, the reflective mirror 40 is disposed ahead of the turning-back mirror 12 along the optical axial direction of the turning-back mirror 12 to receive the reflected light (output light) from the turning-back mirror 12, and reflects the reflected light toward the reflector 30.

The controller 20 drives and controls the drive mechanism 14 to reciprocate the holding member 13 together with the display unit 11 and the turning-back mirror 12 with respect to the reflective mirror 40, thereby changing the optical path length of the output light reflected by the turning-back mirror 12 up to the reflective mirror 40 (FIGS. 1 and 3). In this way, the vehicle display device 1 changes the virtual image distance Dvi without degrading the display quality of the virtual image display. For example, in the vehicle display device 1, as illustrated in FIG. 3, by widening a gap between the turning-back mirror 12 and the reflective mirror 40 (displacement from the solid line to the two dot chain line), the optical path length of the output light reflected by the turning-back mirror 12 up to the reflective mirror 40 is increased and the virtual image position Pvi is moved away from the eye box EB (Pvi1→Pvi2), resulting in an increase in the virtual image distance Dvi without degrading the display quality of the virtual image display (Dvi1→Dvi2). In the vehicle display device 1, as illustrated in FIG. 3, by narrowing the gap between the turning-back mirror 12 and the reflective mirror 40 (displacement from the two dot chain line to the solid line), the optical path length of the output light reflected by the turning-back mirror 12 up to the reflective mirror 40 is decreased and the virtual image position Pvi approaches the eye box EB closer (Pvi2→Pvi1), resulting in a decrease in the virtual image distance Dvi without degrading the display quality of the virtual image display (Dvi2→Dvi1).

For example, the controller 20 receives a detection signal from a vehicle speed sensor (not illustrated) of the vehicle, and reciprocates the holding member 13 together with the display unit 11 and the turning-back mirror 12 depending on a vehicle speed.

The controller 20, for example, moves the holding member 13 so that the optical path length of the output light reflected by the turning-back mirror 12 increases as the vehicle speed increases. Thus, the vehicle display device 1 increases the virtual image distance Dvi without degrading the display quality of the virtual image display as the vehicle speed increases, and thus can cope with changes in the line of sight of the occupant who turns his/her eyes farther away as the vehicle speed increases.

Furthermore, the controller 20, for example, moves the holding member 13 so that the optical path length of the output light reflected by the turning-back mirror 12 increases as the vehicle speed reaches a high-speed range depending on a plurality of predefined vehicle speed ranges. Thus, the vehicle display device 1 increases the virtual image distance Dvi without degrading the display quality of the virtual image display as the vehicle speed range increases, and thus can cope with changes in the line of sight of the occupant who turns his/her eyes farther away as the vehicle speed increases.

In this way, the vehicle display device 1 can perform drive control depending on the vehicle speed, thereby suppressing the sense of discomfort of the occupant while improving the convenience of the occupant.

For example, when an object such as another vehicle in front of an own vehicle is detected on the basis of image information captured by an imaging device (not illustrated) of the vehicle, a detection signal of a radar device of the vehicle, or the detection signal of the radar device of the vehicle, the controller 20 reciprocates the holding member 13 together with the display unit 11 and the turning-back mirror 12 depending on a distance to the object in front of the own vehicle.

Specifically, the controller 20 moves the holding member 13 together with the display unit 11 and the turning-back mirror 12 to decrease the optical path length of the output light reflected by the turning-back mirror 12 so that the virtual image position Pvi is not set at a position of the object in front of the own vehicle. This allows the vehicle display device 1 to set the virtual image distance Dvi such that the virtual image position Pvi is located between the own vehicle and an object in front of the own vehicle, and to avoid displaying a virtual image that overlaps the object in front of the own vehicle. Consequently, the vehicle display device 1 can maintain the display quality of the virtual image display regardless of the presence or absence of an object in front of the own vehicle, thereby suppressing the sense of discomfort of the occupant while improving the convenience of the occupant.

For example, when the stoppage of the own vehicle is detected on the basis of a detection signal from a vehicle speed sensor and an object such as another vehicle in front of the own vehicle is detected, the controller 20 reciprocates the holding member 13 together with the display unit 11 and the turning-back mirror 12 depending on a distance to the object in front of the own vehicle. Thus, if an inter-vehicle distance to another vehicle ahead is short when waiting at a traffic light or the like, the vehicle display device 1 can display a virtual image at a suitable virtual image distance Dvi without degrading the display quality.

As described above, the vehicle display device 1 of the present embodiment can change the virtual image distance Dvi depending on usage conditions of a vehicle without degrading the display quality of virtual image display. That is, the vehicle display device 1 can optimize the virtual image distance depending on the usage conditions of the vehicle. Since the vehicle display device 1 employs a slide structure with only a reciprocating motion in the drive mechanism 14, the structure is simpler than those that adopt a rotating structure or use a rotating structure in combination, which can suppress reduction in positional accuracy in reciprocating motion due to tolerance accumulation and reduce costs.

A vehicle display device according to the present embodiment changes a virtual image distance by changing an optical path length of output light reflected by a turning-back mirror. The vehicle display device changes the optical path length of the reflected light (output light) from the turning-back mirror without changing relative positions of a display unit and the turning-back mirror (that is, without changing an angle formed by incident light and the reflected light on the turning-back mirror). Therefore, the vehicle display device can change the optical path length of the reflected light (output light) from the turning-back mirror without changing a light-receiving area of display light from the display unit on the turning-back mirror. Consequently, the vehicle display device can change the virtual image distance without degrading the display quality of virtual image display.

## Claims

1. A vehicle display device (1) comprising:
an output unit (10) that outputs output light of display information to be visually recognized as a virtual image by an occupant in a vehicle cabin;
a reflector (30) that directly or indirectly receives the output light from the output unit (10), and reflects the output light toward an eye box (EB) indicating a region in which the occupant is able to visibly recognize the virtual image; and
a controller (20) configured to control an operation of the output unit (10), wherein
the output unit (10) includes:
a display unit (11) that emits the display information as display light;
a turning-back mirror (12) that reflects, as the output light, the display light emitted from the display unit (11); **characterized by**
a holding member (13) that holds the display unit (11) and the turning-back mirror (12) without changing relative positions of the display unit (11) and the turning-back mirror (12); and
a drive mechanism (14) that is able to reciprocate the holding member (13) along an optical axial direction of the turning-back mirror (12), and
the controller (20) drives and controls the drive mechanism (14) to reciprocate the holding member (13) together with the display unit (11) and the turning-back mirror (12), thereby changing an optical path length of the output light reflected by the turning-back mirror (12).

2. The vehicle display device (1) according to claim 1, further comprising:
a reflective mirror (40) that reflects the output light from the output unit (10) toward the reflector (30), wherein
the turning-back mirror (12) is disposed at a position where the display light emitted from the display unit (11) is reflected toward the reflective mirror (40), and
the controller (20) drives and controls the drive mechanism (14) to reciprocate the holding member (13) together with the display unit (11) and the turning-back mirror (12) with respect to the reflective mirror (40).

3. The vehicle display device (1) according to claim 1 or 2, wherein
the controller (20) reciprocates the holding member (13) together with the display unit (11) and the turning-back mirror (12) depending on a vehicle speed.

4. The vehicle display device (1) according to claim 1 or 2, wherein
the controller (20) reciprocates the holding member (13) together with the display unit (11) and the turning-back mirror (12) depending on a distance to an object in front of an own vehicle.

## Patentansprüche

1. Fahrzeuganzeigevorrichtung (1), umfassend:
eine Ausgabeeinheit (10), die Ausgangslicht von Anzeigeinformationen ausgibt, die von einem Insassen in einer Fahrzeugkabine visuell als ein virtuelles Bild erkannt werden sollen;
einen Reflektor (30), der das von der Ausgabeeinheit (10) ausgegebene Licht direkt oder indirekt empfängt und das ausgegebene Licht zu einem Augenfeld (EB) reflektiert, das einen Bereich anzeigt, in dem der Insasse das virtuelle Bild visuell erkennen kann; und
eine Steuerung (20), die so konfiguriert ist, dass sie einen Betrieb der Ausgabeeinheit (10) steuert, wobei
die Ausgabeeinheit (10) umfasst:
eine Anzeigeeinheit (11), die die Anzeigeinformationen als Anzeigelicht ausstrahlt;
einen Umlenkspiegel (12), der das von der Anzeigeeinheit (11) ausgestrahlte Anzeigelicht als Ausgangslicht reflektiert;
**gekennzeichnet durch**
ein Halteelement (13), das die Anzeigeeinheit (11) und den Umlenkspiegel (12) hält, ohne die relative Position der Anzeigeeinheit (11) und des Umlenkspiegels (12) zu verändern; und
einen Antriebsmechanismus (14), der in der Lage ist, das Halteelement (13) entlang einer optischen Axialrichtung des Umlenkspiegels (12) hin und her zu bewegen, und
die Steuerung (20) den Antriebsmechanismus (14) antreibt und steuert, um das Halteelement (13) zusammen mit der Anzeigeeinheit (11) und dem Umlenkspiegel (12) hin- und herzubewegen, wodurch eine optische Weglänge des von dem Umlenkspiegel (12) reflektierten Ausgangslichts geändert wird.

2. Fahrzeuganzeigevorrichtung (1) nach Anspruch 1, ferner umfassend
einen Reflexionsspiegel (40), der das Ausgangslicht von der Ausgabeeinheit (10) zum Reflektor (30) reflektiert, wobei
der Umlenkspiegel (12) an einer Position angeordnet ist, an der das von der Anzeigeeinheit (11) emittierte Anzeigelicht in Richtung des Reflexionsspiegels (40) reflektiert wird, und
die Steuerung (20) den Antriebsmechanismus (14) antreibt und steuert, um das Halteelement (13) zusammen mit der Anzeigeeinheit (11) und dem Umlenkspiegel (12) in Bezug auf den Reflexionsspiegel (40) hin und her zu bewegen.

3. Fahrzeuganzeigevorrichtung (1) nach Anspruch 1 oder 2, wobei
die Steuerung (20) das Halteelement (13) zusammen mit der Anzeigeeinheit (11) und dem Umlenkspiegel (12) in Abhängigkeit von einer Fahrzeuggeschwindigkeit hin- und herbewegt.

4. Fahrzeuganzeigevorrichtung (1) nach Anspruch 1 oder 2, wobei
die Steuerung (20) das Halteelement (13) zusammen mit der Anzeigeeinheit (11) und dem Umlenkspiegel (12) in Abhängigkeit von einem Abstand zu einem Objekt vor dem eigenen Fahrzeug hin- und herbewegt.

## Revendications

1. Dispositif d'affichage de véhicule (1), comprenant :
une unité de sortie (10) qui émet de la lumière de sortie d'information d'affichage qui doit être reconnue visuellement comme une image virtuelle par un occupant dans une cabine de véhicule ;
un réflecteur (30) qui reçoit directement ou indirectement la lumière de sortie provenant de l'unité de sortie (10), et réfléchit la lumière de sortie vers une boîte oculaire (EB) indiquant une région dans laquelle l'occupant est capable de reconnaître visuellement l'image virtuelle ; et
un contrôleur (20) configuré pour contrôler une opération de l'unité de sortie (10), dans lequel
l'unité de sortie (10) comprend :
une unité d'affichage (11) qui émet l'information d'affichage sous forme de lumière d'affichage ;
un miroir de retour (12) qui réfléchit, en tant que lumière de sortie, la lumière d'affichage émise par l'unité d'affichage (11) ;
**caractérisé par**
un élément de maintien (13) qui maintient l'unité d'affichage (11) et le miroir de retour (12) sans changer les positions relatives de l'unité d'affichage (11) et du miroir de retour (12) ; et
un mécanisme de commande (14) qui est capable de faire effectuer un mouvement de va-et-vient à l'élément de maintien (13) le long d'une direction axiale optique du miroir de retour (12), et
le contrôleur (20) commande et contrôle le mécanisme de commande (14) pour faire effectuer un mouvement de va-et-vient à l'élément de maintien (13) conjointement à l'unité d'affichage (11) et au miroir de retour (12), modifiant ainsi une longueur de chemin optique de la lumière de sortie réfléchie par le miroir de retour (12).

2. Dispositif d'affichage de véhicule (1) selon la revendication 1, comprenant en outre :
un miroir réfléchissant (40) qui réfléchit la lumière de sortie de l'unité de sortie (10) vers le réflecteur (30), dans lequel
le miroir de retour (12) est disposé à une position où la lumière d'affichage émise par l'unité d'affichage (11) est réfléchie vers le miroir réfléchissant (40), et
le contrôleur (20) commande et contrôle le mécanisme de commande (14) pour faire effectuer un mouvement de va-et-vient à l'élément de maintien (13) conjointement à l'unité d'affichage (11) et au miroir de retour (12) par rapport au miroir réfléchissant (40).

3. Dispositif d'affichage de véhicule (1) selon la revendication 1 ou 2, dans lequel
le contrôleur (20) fait effectuer un mouvement de va-et-vient à l'élément de maintien (13) conjointement à l'unité d'affichage (11) et au miroir de retour (12) en fonction de la vitesse du véhicule.

4. Dispositif d'affichage de véhicule (1) selon la revendication 1 ou 2, dans lequel
le contrôleur (20) fait effectuer un mouvement de va-et-vient à l'élément de maintien (13) conjointement à l'unité d'affichage (11) et au miroir de retour (12) en fonction d'une distance par rapport à un objet situé devant un propre véhicule.
